# EUROPEAN PATENT SPECIFICATION

(11) **EP 2 738 065 B1**
(45) Date of publication and mention of the grant of the patent: **01.11.2017**
(21) Application number: 12817126.1
(22) Date of filing: 10.07.2012
(51) Int. Cl.: B62D 3/12

(54) **RACK GUIDE, AND RACK AND PINION STEERING DEVICE WITH RACK GUIDE**
ZAHNSTANGENFÜHRUNG SOWIE ZAHNSTANGEN- IMD RITZELLENKUNG MIT DER ZAHNSTANGENFÜHRUNG
GUIDE DE CRÉMAILLÈRE ET DISPOSITIF DE DIRECTION À PIGNON ET CRÉMAILLÈRE COMPORTANT UN GUIDE DE CRÉMAILLÈRE

(30) Priority: 28.07.2011 JP 2011165933
(43) Date of publication of application: 04.06.2014
(73) Proprietor: OILES CORPORATION, Tokyo 108-0075 (JP)
(72) Inventor: YAMASHITA, Eiichi, Fujisawa-shi Kanagawa 252-0811 (JP); NAKAGAWA, Noboru, Fujisawa-shi Kanagawa 252-0811 (JP); KINJYO, Masaya, Fujisawa-shi Kanagawa 252-0811 (JP)
(74) Representative: J A Kemp
(86) International application number: PCT/JP2012/004459
(87) International publication number: WO 2013/014870

(56) References cited:
- EP-A1- 1 508 708
- JP-A- 7 323 850
- JP-A- 7 323 850
- JP-A- 7 323 851
- JP-A- 11 091 592
- JP-A- 50 021 973
- JP-A- 50 021 973
- JP-A- 50 102 027
- JP-A- 61 123 430
- JP-A- 61 123 430
- JP-A- 2000 177 604
- JP-A- 2000 177 604
- JP-A- 2002 337 702
- JP-U- H0 738 721
- JP-U- H0 738 721
- JP-Y2- 1 027 495
- JP-Y2- 64 006 382
- US-A1- 2005 257 635
- US-B1- 6 178 843

## Description

### TECHNICAL FIELD

The present invention relates to a rack guide and a rack-and-pinion type steering apparatus having the rack guide.

### BACKGROUND ART

A rack-and-pinion type steering apparatus is generally comprised of a gear case, a pinion rotatably supported by this gear case, a rack bar on which rack teeth meshing with this pinion are formed, a rack guide disposed in the gear case to support the rack bar slidably, and a coil spring for pressing this rack guide toward the rack bar.

In the rack-and-pinion type steering apparatus, an iron-based sintered metal or a synthetic resin is used as the rack guide for supporting the rack bar slidably. In the case of the rack guide formed of an iron-based sintered metal, although it has sufficient mechanical strength against an impact load from the rack bar, the efficiency of a steering system declines since the sliding frictional resistance is large, so that it has a problem in maneuverability. Meanwhile, as for the rack guide formed of a synthetic resin, although it is conversely capable of reducing the sliding frictional resistance, the following problems are encountered among others: It is inferior in mechanical strength against an impact load. It undergoes variations in dimensions due to such as mold shrinkage, so that it is difficult to effect molding with good dimensional accuracy, and it is difficult to maintain the dimensional accuracy after molding. Furthermore, after it is built into the casing, it is affected by the temperature rise of the steering apparatus and undergoes thermal expansion and shrinkage, which causes thermal deformation and creep, making it difficult to slidingly support the rack bar smoothly.

### PRIOR ART DOCUMENTS

### PATENT DOCUMENTS

Patent Document 1: JP-A-50-102027
Patent Document 2: JP-UM-B-64-6382
Patent Document 3: JP-UM-B-1-27495
Patent Document 4: JP-A-2000-177604

JP 2000-177604 discloses a rack guide in accordance with the pre-characterizing section of claim 1.

### SUMMARY OF THE INVENTION

### PROBLEMS THAT THE INVENTION IS TO SOLVE

As a means for overcoming the above-described problems, proposals have been made in Patent Document 1, Patent Document 2, Patent Document 3, and Patent Document 4 to form a rack guide comprised of a synthetic resin-made rack guide base body, containing a metal such as an iron-based sintered metal or aluminum or a reinforcing filler such as glass fiber, and of a curved sliding plate piece secured to this rack guide base body.

In the rack-and-pinion type steering apparatus having the above-described rack guide, the securing of the curved sliding plate piece to the rack guide base body is effected by causing a tubular projection formed integrally on the curved sliding plate piece by burring or the like to be press-fitted into a through hole formed in a central portion of the rack guide base body.

In particular, since the tubular projection of the curved sliding plate piece described in Patent Document 3 has a bottom portion, advantages are offered in that it is capable of reducing the possibility of change of form such as the reduced diameter at a distal end portion side of the tubular projection, and it is hence possible to enhance the press-fitting force of the curved sliding plate piece in the through hole of the rack guide body and securely hold the rack guide base body over extended periods of time, thereby making it possible to avoid the unfavorable situation of an increase in sliding resistance and wear.

However, even with the tubular projection having the bottom portion, in the case of the rack guide base body formed of a synthetic resin containing a reinforcing filler, after the rack guide base body is built into the gear case of the rack-and-pinion type steering apparatus, the rack guide base body undergoes stress relaxation by being affected by the temperature rise of the steering apparatus, with the result that the press-fitting force of the tubular projection in the through hole decreases, and backlash is produced between the tubular projection and the through hole. Hence, a drawback can possibly occur such as in that the smooth sliding support of the rack bar is often hampered due to a decline in the securing force of the curved sliding plate piece onto the rack guide base body.

The present invention has been devised in view of the above-described aspects, and its object is to provide a rack guide which, even in cases where stress relaxation has occurred to the rack guide base body by being affected by the temperature rise, is capable of maintaining the state in which the curved sliding plate piece is firmly secured to the synthetic resin-made rack guide base body, as well as rack-and-pinion type steering apparatus having this rack guide.

### MEANS FOR SOLVING THE PROBLEMS

A rack guide in accordance with the present invention comprises: a synthetic resin-made rack guide base body which has an arcuate concave surface provided at one end face thereof, a hollow recessed portion provided at another end face thereof, and a circular through hole which at one end thereof is open in a central portion of the arcuate concave surface and which at another end thereof is open in the hollow recessed portion; and a curved sliding plate piece which has an arcuate concave surface for supporting an arcuate outer peripheral surface of a rack bar slidably, an arcuate convex surface which is brought into close contact with the arcuate concave surface of said rack guide base body, and a tubular projecting portion which is provided integrally on the arcuate convex surface, and which is open in the arcuate concave surface and has an interior closed with respect to the hollow recessed portion, characterized in that, said projecting portion has a tubular portion provided integrally on the arcuate convex surface at one end thereof, a closed bottom portion provided at the other end of the tubular portion, and a bulged portion which is on one side thereof provided integrally on the tubular portion and is on another side thereof provided integrally on the closed bottom portion and is expanded radially outwardly, and said curved sliding plate piece is secured to said rack guide base body as the tubular portion is press-fitted into the circular through hole and the bulged portion is brought into pressure contact with said rack guide base body around the other end of the circular through hole, said hollow recessed portion is defined by a cylindrical inner peripheral surface of the rack guide base body and an annular ceiling surface of the rack guide base body, a plurality of reinforcing vertical ribs are integrally formed on the cylindrical inner peripheral surface in such a manner as to be spaced apart at equal intervals in a circumferential direction, a plurality of reinforcing horizontal ribs are integrally formed on the ceiling surface in such a manner as to be connected to the respective vertical ribs and to be spaced apart at equal intervals in the circumferential direction, and said circular through hole is open at the ceiling surface to the hollow recessed portion.

According to the rack guide in accordance with the present invention, since the curved sliding plate piece is secured to the rack guide base body by press-fitting the tubular portion into the circular through hole and by causing the bulged portion to be brought into pressure contact with the rack guide base body around the other end of the circular through hole, even in cases where stress relaxation has occurred to the rack guide base body by being affected by the temperature rise of the rack-and-pinion type steering apparatus having the rack guide, it is possible to maintain the state in which the curved sliding plate piece is firmly secured to the rack guide base body, thereby making it possible to slide and support the rack bar smoothly.

In a preferred example, the bulged portion is formed by caulking the circular outer rim of the closed bottom portion in the securing of the curved sliding plate piece to the rack guide base body.

As the bulged portion is thus formed by caulking the circular outer rim of the closed bottom portion in the securing of the curved sliding plate piece to the rack guide base body, it is possible to more favorably maintain the secured state of the curved sliding plate piece onto the rack guide base body, thereby making it possible to slide and support the rack bar smoothly over extended periods of time.

In the rack guide in accordance with the present invention, the curved sliding plate piece is preferably constituted by a at least a three-layered structure including a back plate, a porous sintered metal layer integrally coated and formed on a surface of the back plate, and a synthetic resin layer coated on a surface of the porous sintered metal layer in such a manner as to fill pores of the porous sintered metal layer, in which case the arcuate concave surface is constituted by an exposed surface of the synthetic resin layer.

The porous sintered metal layer is preferably formed of a copper-based metal, such as a bronze alloy, which excels in thermal conductivity over an iron-based metal, and, as the synthetic resin layer, one is preferably used in which a filler of various types is contained in polyacetal resin, polyamide resin, polytetrafluoroethylene resin, or the like and which excels in self lubricity.

In a preferred example, the arcuate concave surface of the rack guide base body has a substantially elliptical shape in a plan view, in which case the curved sliding plate piece which is disposed on the arcuate concave surface may have a substantially elliptical shape in a plan view and may be disposed on the arcuate concave surface having the substantially elliptical shape in a plan view.

In another preferred example, the rack guide base body has on the one end face thereof a pair of plan-view substantially semielliptical concave surfaces and a plan-view rectangular concave portion which is sandwiched by the pair of plan-view substantially semielliptical concave surfaces and on which the arcuate concave surface is formed, in which case the curved sliding plate piece may have a rectangular shape in a plan view and is fitted and secured to the plan-view rectangular concave portion.

In the rack guide in accordance with the present invention, the arcuate concave surface of the curved sliding plate piece may be constituted by two arcuate concave surfaces which are symmetrical with respect to a center line passing through a center of curvature of the arcuate outer peripheral surface of the rack bar, such that, in an angular range from an angle 0° to an angle not exceeding 50° on either side in an angular direction of the center line passing through the center of curvature of the arcuate outer peripheral surface of the rack bar, each of the arcuate concave surfaces has as its center of curvature the center of curvature of the arcuate outer peripheral surface of the rack bar and has a radius of curvature substantially identical to a radius of curvature of the arcuate outer peripheral surface of the rack bar, so as to come into contact with the arcuate outer peripheral surface of the rack bar, whereas, in an angular range exceeding an angle 50°, each of the arcuate concave surfaces has a center of curvature off-centered from the center of curvature of the arcuate outer peripheral surface of the rack bar and has a radius of curvature greater than the radius of curvature of the arcuate outer peripheral surface of the rack bar, so as to have a clearance with the arcuate outer peripheral surface of the rack bar.

If the arcuate concave surface of the curved sliding plate piece is thus in contact with the arcuate outer peripheral surface of the rack bar in the angular range from an angle 0° to an angle not exceeding 50°, and opposes the arcuate outer peripheral surface of the rack bar with a clearance in an angular range exceeding an angle 50°, the wear resistance of the curved sliding plate piece improves, and it is possible to improve the fracture strength of the rack guide base body with the curved sliding plate piece secured thereto.

Instead of the above-described construction, the arcuate concave surface of the curved sliding plate piece may be constituted by two arcuate concave surfaces which are symmetrical with respect to a center line passing through a center of curvature of the arcuate outer peripheral surface of the rack bar, such that each of the arcuate concave surfaces has a center of curvature off-centered from a center of curvature of the arcuate outer peripheral surface of the rack bar and has a radius of curvature greater than a radius of curvature of the arcuate outer peripheral surface of the rack bar, so as to respectively come into contact with the arcuate outer peripheral surface of the rack bar at each of two regions in an angular range from an angle 0° to an angle 90°, preferably from 30° to 60°, more preferably from 30° to 45°, on each side of the center line passing through the center of curvature of the arcuate outer peripheral surface of the rack bar.

If the arcuate concave surface of the curved sliding plate piece is thus constituted by two arcuate concave surfaces each having a center of curvature off-centered from the center of curvature of the arcuate outer peripheral surface of the rack bar and having a radius of curvature greater than the radius of curvature of the arcuate outer peripheral surface of the rack bar, the sliding contact of the arcuate outer peripheral surface of the rack bar with the arcuate concave surface of the curved sliding plate piece takes place in the form of line contact or narrow band-like contact at two regions. As a result, it is possible to substantially reduce the sliding frictional resistance between the rack bar and the curved sliding plate piece. Moreover, if the firm securing between the curved sliding plate piece and the rack guide base body is maintained over extended periods of time due to the pressure contact of the bulged portion with the rack guide base body around the other end of the circular through hole, this line contact or narrow band-like contact is also maintained over extended periods of time, so that a drawback such as the one-sided contact between the arcuate outer peripheral surface of the rack bar and the curved sliding plate piece does not occur, and therefore the unfavorable situation of an increase in the sliding frictional resistance can also be avoided.

In the rack guide in accordance with the present invention, the rack guide base body may be formed of a thermoplastic synthetic resin containing as a reinforcing filler 30 to 50% by mass of an inorganic substance such as glass fiber, carbon fiber, and glass powder, and, as the thermoplastic synthetic resin, one is favorably used which is selected from such as polyacetal resin, polyamide resin, polyester resin including polybutylene terephthalate (PBT) and polyethylene terephthalate (PET), and polyphenylene sulfide resin (PPS).

A rack-and-pinion type steering apparatus in accordance with the present invention comprises: a gear case having a hollow portion; a pinion which is disposed rotatably in the hollow portion of the gear case and is rotated by steering; a rack bar having rack teeth meshing with the pinion; a rack guide according to any one of the above-described aspects which is disposed movably in the hollow portion of the gear case and guides and supports the rack bar movably; and resilient means which is disposed in the hollow portion of the gear case and resiliently presses the rack teeth of the rack bar against the pinion by means of the rack guide.

According to the rack-and-pinion type steering apparatus in accordance with the present invention, in the rack guide for guiding and supporting the rack bar slidably, even in cases where stress relaxation has occurred to the rack guide base body by being affected by the temperature rise of the rack-and-pinion type steering apparatus, it is possible to maintain the state in which the curved sliding plate piece is firmly secured to the rack guide base body, as described above, with the result that it is possible to slide and support the rack bar smoothly over extended periods of time without occurring a drawback such as the one-sided contact.

### ADVANTAGES OF THE INVENTION

According to the present invention, it is possible to provide a rack guide which, even in cases where stress relaxation has occurred to the rack guide base body by being affected by the temperature rise, is capable of maintaining the state in which the curved sliding plate piece is firmly secured to the synthetic resin-made rack guide base body, as well as rack-and-pinion type steering apparatus having this rack guide.

### BRIEF DESCRIPTION OF THE DRAWINGS

Fig. 1 is an explanatory cross-sectional view of an embodiment of a rack-and-pinion type steering apparatus in accordance with the invention;
Fig. 2 is an explanatory plan view of a rack guide in the embodiment shown in Fig. 1;
Fig. 3 is an explanatory enlarged cross-sectional view of the rack guide in the embodiment shown in Fig. 1;
Fig. 4 is an explanatory partially enlarged cross-sectional view of the rack guide in the embodiment shown in Fig. 3;
Fig. 5 is an explanatory cross-sectional view taken in the direction of arrows along line V - V shown in Fig. 2;
Fig. 6 is an explanatory bottom view of the rack guide shown in Fig. 2;
Fig. 7 is an explanatory perspective view of a rack guide base body in the rack guide shown in Fig. 2;
Fig. 8 is an explanatory plan view of a sliding plate piece material in the rack guide shown in Fig. 2;
Fig. 9 is an explanatory cross-sectional view of a multilayered plate for forming a curved sliding plate piece;
Fig. 10 is an explanatory plan view of another embodiment of the rack guide in accordance with the invention;
Fig. 11 is an explanatory perspective view of the rack guide base body in the rack guide shown in Fig. 10; and
Fig. 12 is an explanatory enlarged cross-sectional view of still another embodiment of the rack guide.

### MODE FOR CARRYING OUT THE INVENTION

Hereafter, a more detailed description will be given of the mode for carrying out the invention with reference to the preferred embodiments illustrated in the drawings. It should be noted that the invention is not limited by these embodiments.

### EMBODIMENT

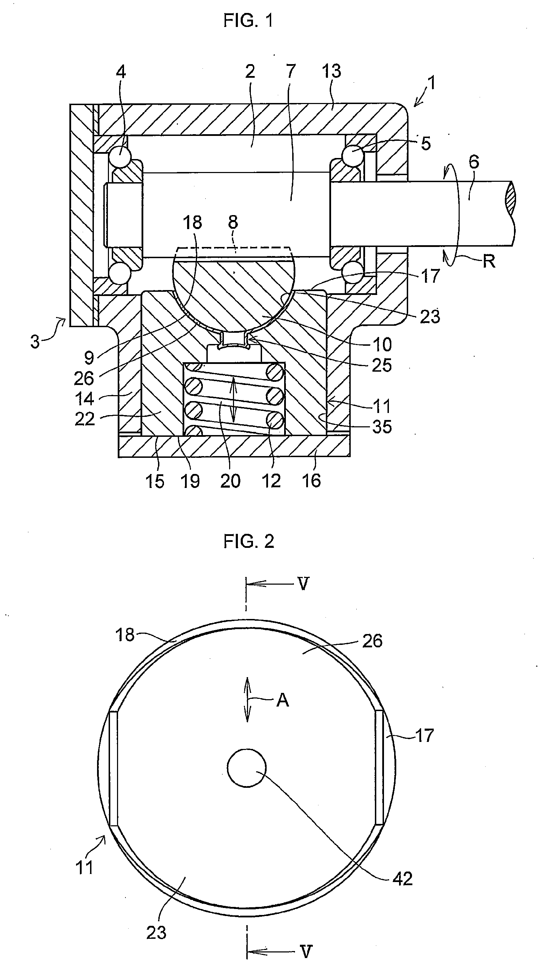

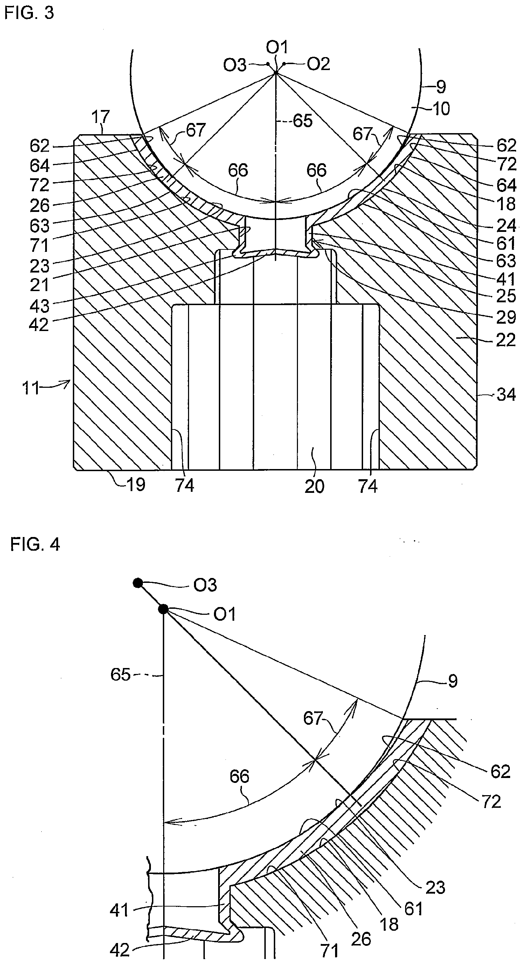

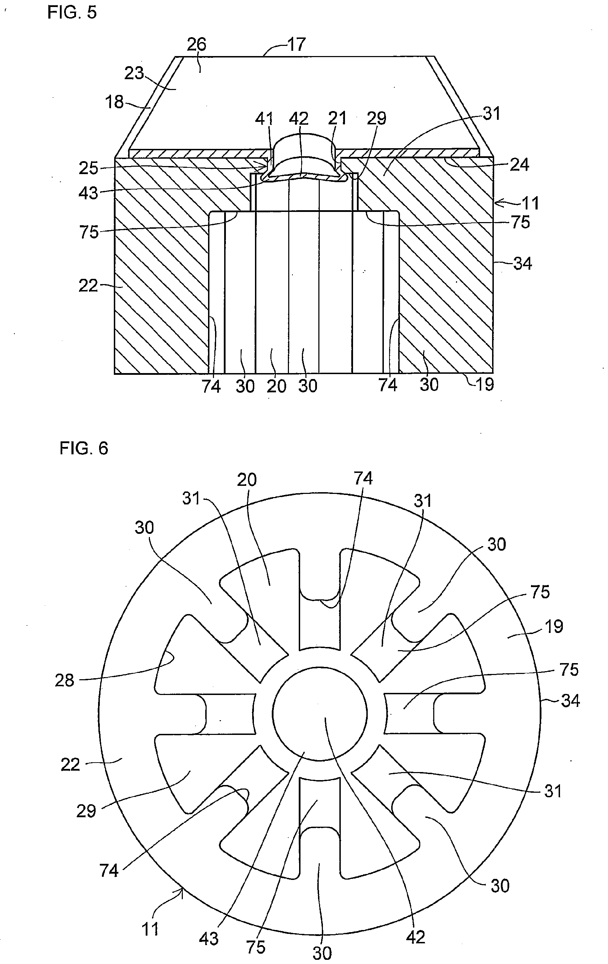

In Figs. 1 to 8, a rack-and-pinion type steering apparatus 1 in accordance with this embodiment is comprised of a gear case 3 having a hollow portion 2; a steering shaft 6 supported in the hollow portion 2 of the gear case 3 by means of rolling bearings 4 and 5 rotatably about its axis in an R direction; a pinion 7 which is supported by being integrally provided on a shaft end of the steering shaft 6, and is disposed in the hollow portion 2 of the gear case 3 through the steering shaft 6 rotatably in the R direction; a rack bar 10 which has rack teeth 8 meshing with the pinion 7 and has an arcuate outer peripheral surface 9 of a predetermined radius of curvature on its back surface relative to the rack teeth 8; a rack guide 11 which is disposed movably in the hollow portion 2 of the gear case 3 and guides and supports the rack bar 10 movably in an axial direction A; and a coil spring 12 serving as a resilient means which is disposed in the hollow portion 2 of the gear case 3 and resiliently presses the rack teeth 8 of the rack bar 10 toward the pinion 7 by means of the rack guide 11.

The gear case 3 has a main body portion 13 for supporting the rolling bearings 4 and 5, a hollow cylindrical portion 14 formed integrally on the main body portion 13, and a cover member 16 secured to the hollow cylindrical portion 14 so as to close an opening 15 of the hollow cylindrical portion 14.

The rack bar 10, which is passed through the gear case 3 in the axial direction A, i.e., a perpendicular direction to the axis of the steering shaft 6, and is disposed movably in that axial direction A, has the arcuate outer peripheral surface 9 on its rear surface side (back surface) opposing its surface where the rack teeth 8 are formed.

The rack guide 11 includes a synthetic resin-made rack guide base body 22 which has an arcuate concave surface 18 provided at its one end face 17 in such a manner as to oppose the arcuate outer peripheral surface 9 of the rack bar 10 and having a substantially elliptical shape in a plan view, a hollow recessed portion 20 provided at its other end face 19, and a circular through hole 21 which at its one end is open in a central portion of the arcuate concave surface 18 and which at its other end is open in the hollow recessed portion 20; and a curved sliding plate piece 26 which is disposed on the arcuate concave surface 18 having the substantially elliptical shape in a plan view and which has an arcuate concave surface 23 for supporting the arcuate outer peripheral surface 9 of the rack bar 10 slidably, an arcuate convex surface 24 which is brought into close contact with the arcuate concave surface 18 of the rack guide base body 22, and a tubular projecting portion 25 provided integrally on the arcuate convex surface 24.

The hollow recessed portion 20, which is open at the end face 19, is defined by a cylindrical inner peripheral surface 28 of the rack guide base body 22 and an annular ceiling surface 29 of the rack guide base body 22. A plurality of reinforcing vertical ribs 30 are integrally formed on the cylindrical inner peripheral surface 28 in such a manner as to be spaced apart at equal intervals in a circumferential direction, while a plurality of reinforcing horizontal ribs 31 are integrally formed on the ceiling surface 29 in such a manner as to be connected to the respective vertical ribs 30 and to be spaced apart at equal intervals in the circumferential direction. The circular through hole 21 is open at the ceiling surface 29 to the hollow recessed portion 20.

The rack guide base body 22 is preferably formed of a thermoplastic synthetic resin containing as a reinforcing filler 30 to 50% by mass of at least one inorganic substance selected from glass fiber, carbon fiber, and glass powder, and the thermoplastic synthetic resin is preferably selected from polyacetal resin, polyamide resin, polyester resin including polybutylene terephthalate (PBT) and polyethylene terephthalate (PET), and polyphenylene sulfide resin.

The rack guide base body 22 is, at its cylindrical outer surface 34, in contact with an inner surface 35 of the hollow cylindrical portion 14 of the gear case 3 slidably in a B direction which is a perpendicular direction to the axial direction A and is a perpendicular direction to the axis of the steering shaft 6, whereby the rack guide 11 is slidable in the B direction.

The projecting portion 25 has a tubular portion 41 provided integrally on the arcuate convex surface 24 at one end thereof, a closed bottom portion 42 provided at the other end of the tubular portion 41, and a bulged portion 43 which is provided integrally on each of the tubular portion 41 and the closed bottom portion 42 and is expanded radially outwardly from the tubular portion 41 and the closed bottom portion 42, the bulged portion 43 being integrally connected at its one end to the tubular portion 41 and at its other end to the closed bottom portion 42.

The curved sliding plate piece 26, which has a substantially elliptical shape in a plan view and is bent in a curved shape as a whole, is secured to the rack guide base body 22 by press-fitting its tubular portion 41 into the circular through hole 21 and by causing the bulged portion 43 to be brought into pressure contact with the ceiling surface 29 of the rack guide base body 22 around the other end of the circular through hole 21. The bulged portion 43 is formed by caulking a circular outer rim of the closed bottom portion 42 in the securing of the curved sliding plate piece 26 to the rack guide base body 22.

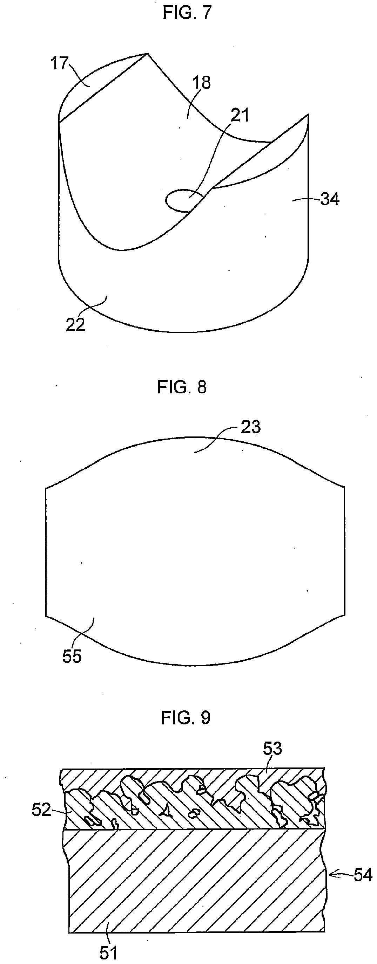

The curved sliding plate piece 26 is formed such that, as shown in Fig. 7, a sliding plate piece material 55 of a substantially elliptical shape is formed by stamping a three-layered multilayered plate 54 comprised of a thin steel plate 51 serving as a back plate, a porous sintered metal layer 52 integrally coated and formed on the surface of the thin steel plate 51, and a synthetic resin layer 53 coated on the surface of the porous sintered metal layer 52 in such a manner as to fill pores of the porous sintered metal layer 52, as shown in Fig. 8, and the sliding plate piece material 55 is then subjected to press bending so as to obtain the arcuate concave surface 23 constituted by an exposed surface of the synthetic resin layer 53, and is further subjected to drawing so as to obtain the projecting portion 25 having the closed bottom portion 42 at its distal end integrally.

The arcuate concave surface 23 of the curved sliding plate piece 26 has an arcuate concave surface 61 and a pair of arcuate concave surfaces 62, and is, at the arcuate concave surface 61, brought into slidable contact with the arcuate outer peripheral surface 9 of the rack bar 10 to support the rack bar 10 movably in the axial direction A, such that each of the arcuate concave surfaces 62 does not come into contact with the arcuate outer peripheral surface 9 and opposes the arcuate outer peripheral surface 9 of the rack bar 10 with a clearance therebetween. The arcuate convex surface 24 of the curved sliding plate piece 26, which is the reverse side (back surface) to the arcuate concave surface 23 having the arcuate concave surface 61 and the pair of arcuate concave surfaces 62, also has an arcuate convex surface 63 and a pair of arcuate convex surfaces 64 which are similar to the arcuate concave surface 61 and the pair of arcuate concave surfaces 62.

The arcuate concave surface 61 has a center of curvature O1 substantially identical to a center of curvature O1 of the arcuate outer peripheral surface 9 of the rack bar 10 and has a radius of curvature identical to the radius of curvature of the arcuate outer peripheral surface 9 of the rack bar 10, so as to come into contact with the arcuate outer peripheral surface 9 of the rack bar 10 in an angular range 66 from an angle 0° to an angle not exceeding 50° on each of one side and the other side in an angular direction of a center line 65 passing through the center of curvature O1 of the arcuate outer peripheral surface 9 of the rack bar 10. Meanwhile, the arcuate concave surfaces 62 respectively have centers of curvature 02 and 03 off-centered from the center of curvature O1 of the arcuate outer peripheral surface 9 of the rack bar 10 and have a radius of curvature greater than the radius of curvature of the arcuate outer peripheral surface 9 of the rack bar 10, so as to have a clearance with the arcuate outer peripheral surface 9 of the rack bar 10, without coming into contact therewith, in an angular range 67 exceeding an angle 50° on each of one side and the other side in the angular direction of the center line 65 passing through the center of curvature O1 of the arcuate outer peripheral surface 9 of the rack bar 10. The arcuate concave surface 61 and the pair of arcuate concave surfaces 62 are thus formed symmetrically with respect to the center line 65.

Preferably, the arcuate convex surface 63 and the pair of arcuate convex surfaces 64 respectively have similar shapes with greater radii of curvature than the respective radii of curvature of the corresponding arcuate concave surface 61 and pair of arcuate concave surfaces 62, and are thus formed symmetrically with respect to the center line 65.

The arcuate concave surface 18 of the rack guide base body 22 is formed by an arcuate concave surface 71 and a pair of arcuate concave surfaces 72 having complementary shapes to the shapes of the arcuate convex surface 63 and the pair of arcuate convex surfaces 64 of the curved sliding plate piece 26 so as to be brought into close contact with the arcuate convex surface 63 and the pair of arcuate convex surfaces 64.

The coil spring 12, which is disposed in such a manner as to be surrounded by side surfaces 74 of the vertical ribs 30 in the hollow recessed portion 20 of the rack guide base body 22, abuts at its one end against lower surfaces 75 of the horizontal ribs 31 and at its other end against the cover member 16 closing the opening 15 of the hollow cylindrical portion 14 of the gear case 3, and presses the curved sliding plate piece 26 toward the rack bar 10 by means of the rack guide base body 22.

In the above-described rack-and-pinion type steering apparatus 1, the rack guide 11 ensures the meshing of the rack teeth 8 with the pinion 7 by the pressing of the curved sliding plate piece 26 against the rack bar 10 through the resiliency of the coil spring 12, and guides the sliding movement of the rack bar 10 in the axial direction A caused by that meshing in the rotation of the steering shaft 6 in the R direction by the sliding contact of the arcuate outer peripheral surface 9 of the rack bar 10 with the arcuate concave surface 61 of the curved sliding plate piece 33.

In the rack-and-pinion type steering apparatus 1, since the curved sliding plate piece 26 is secured to the rack guide base body 22 by being brought into pressure contact at its bulged portion 43 with the ceiling surface 29 of the rack guide base body 22 around the other end of the circular through hole 21, it is possible to maintain the securing of the curved sliding plate piece 26 to the rack guide base body 22 over extended periods of time even in cases stress relaxation has occurred in the rack guide base body 22 by being affected by the temperature rise of the rack-and-pinion type steering apparatus 1, and the press-fitting force at the tubular portion 41 into the rack guide base body 22 has declined. As a result, the curved sliding plate piece 26 can be similarly held securely on the rack guide base body 22 over extended periods of time, and the rack bar 10 is able to maintain its surface contact with the curved sliding plate piece 26 over the angular ranges 66 over extended periods of time as in the state of its initial setting. In addition, as a result of the fact that the rack bar 10 remains in surface contact with the curved sliding plate piece 26 in the angular ranges 66, the fracture strength of the rack guide base body 22 is improved, and the wear resistance of the curved sliding plate piece 26 is improved.

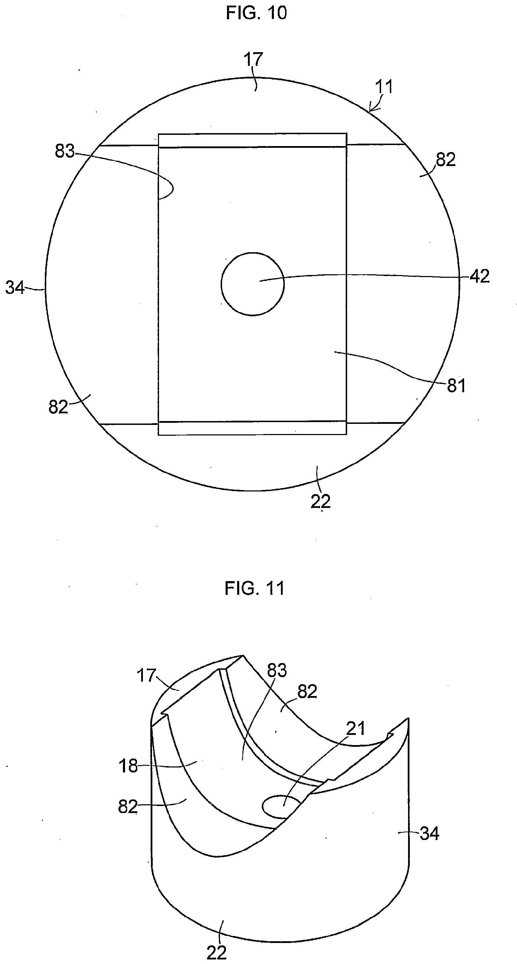

Although, in the above description, the curved sliding plate piece 26 is used which is substantially elliptical in a plan view and is bent in a curved shape as a whole, the rack guide 11 may alternatively be formed, as shown in Figs. 9 and 10, such that, as the curved sliding plate piece 26, a rectangular sliding plate piece material 55 is formed by stamping or cutting the three-layered multilayered plate 54 into a rectangular shape, and is subjected to bending and drawing in the same way as described above to thereby form a curved sliding plate piece 81 which is rectangular in a plan view; meanwhile, a pair of plan-view substantially semielliptical concave surfaces 82 and a plan-view rectangular concave portion 83, which is sandwiched by the pair of plan-view substantially semielliptical concave surfaces 82 and on which the arcuate concave surface 18 having a substantially elliptical shape in a plan view is formed, are formed on the one end face 17 of the rack guide base body 22, and the curved sliding plate piece 81 serving as the curved sliding plate piece 26 is fitted and secured to the plan-view rectangular concave portion 83. Also with the rack-and-pinion type steering apparatus 1 using the rack guide 11 having the rack guide base body 22, on the one end face 17 of which are provided the pair of plan-view substantially semielliptical concave surfaces 82 and the plan-view rectangular concave portion 83 sandwiched by the pair of plan-view substantially semielliptical concave surfaces 82 and having the arcuate concave surface 18 formed thereon, as well as the curved sliding plate piece 81 fitted and secured to the plan-view rectangular concave portion 83 of the rack guide base body 22, the curved sliding plate piece 81 is secured to the rack guide base body 22 such that the tubular portion 41 of the curved sliding plate piece 81 is press-fitted in the circular through hole 21, and the bulged portion 43 of the curved sliding plate piece 81 is brought into pressure contact with the ceiling surface 29 of the rack guide base body 22 around the other end of the circular through hole 21; therefore, it is possible to obtain similar advantages to those described above. Furthermore, since the curved sliding plate piece 81 is fitted and secured to the plan-view rectangular concave portion 83, such advantages can be obtained more satisfactorily.

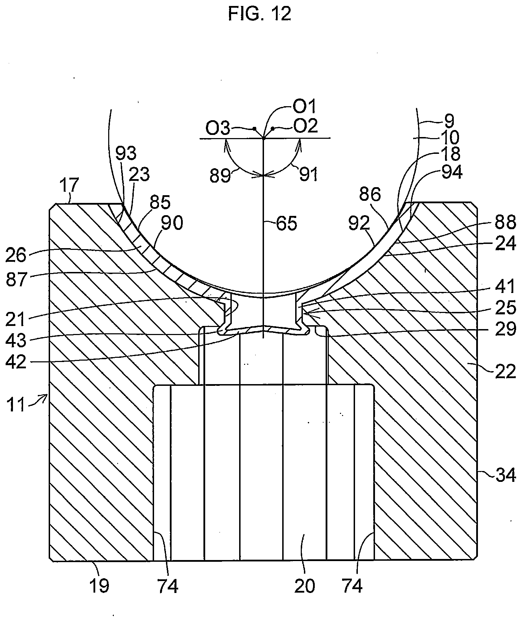

Furthermore, in the above description, on the arcuate concave surface 23 and the arcuate convex surface 24 of the curved sliding plate piece 26, the arcuate concave surface 61 and the pair of arcuate concave surfaces 62 are formed symmetrically with respect to the center line 65 so as to come into contact as a whole with the arcuate outer peripheral surface 9 of the rack bar 10 in the angular ranges 66 from an angle 0° to an angle not exceeding 50° and to have a clearance with the arcuate outer peripheral surface 9 of the rack bar 10, without coming into contact therewith, in the angular range 67 exceeding the angle 50°, and the arcuate convex surface 63 and the pair of arcuate convex surfaces 64 are formed symmetrically about the center line 65 with similar shapes with greater radii of curvature than the respective radii of curvature of the corresponding arcuate concave surface 61 and pair of arcuate concave surfaces 62, while the arcuate concave surface 18 of the rack guide base body 22 is formed by the arcuate concave surface 71 and the pair of arcuate concave surfaces 72 having complementary shapes to the shapes of the arcuate convex surface 63 and the pair of arcuate convex surfaces 64 so as to be brought into close contact with the arcuate convex surface 63 and the pair of arcuate convex surfaces 64. Alternatively, however, as shown in Fig. 12, the arcuate concave surface 23 of the curved sliding plate piece 26 may be formed by being provided with two arcuate concave surfaces 85 and 86 so as to support the rack bar 10 movably in the axial direction A by partially coming into slidable contact with the arcuate outer peripheral surface 9 of the rack bar 10 at the arcuate concave surfaces 85 and 86, while the arcuate convex surface 24 of the curved sliding plate piece 26, which is the reverse side (back surface) to the arcuate concave surface 23 having the two arcuate concave surfaces 85 and 86, may also be formed by being provided with two arcuate convex surfaces 87 and 88.

In the curved sliding plate piece 26 shown in Fig. 12, the arcuate concave surface 85 has a radius of curvature 02 off-centered from the center of curvature O1 of the arcuate outer peripheral surface 9 of the rack bar 10 and have a radius of curvature greater than the radius of curvature of the arcuate outer peripheral surface 9 of the rack bar 10, so as to circumscribe the arcuate outer peripheral surface 9 of the rack bar 10 at a region of an angular range 89 of from 0° to 90°, i.e., at a region 90 of an angle 45° in this embodiment, on one side in the angular direction of the center line 65 passing through the center of curvature O1 of the arcuate outer peripheral surface 9 of the rack bar 10. On the other hand, the arcuate concave surface 86 has a center of curvature 03 off-centered from the center of curvature O1 of the arcuate outer peripheral surface 9 of the rack bar 10 and have a radius of curvature which is greater than the radius of curvature of the rack bar 10 and is identical to the radius of curvature of the arcuate concave surface 85, so as to circumscribe the arcuate outer peripheral surface 9 of the rack bar 10 at a region of an angular range 91 of from 0° to 90°, i.e., at a region 92 of an angle α = 45° in this embodiment, on the other side in the angular direction of the center line 65 passing through the center of curvature O1 of the arcuate outer peripheral surface 9 of the rack bar 10. The two arcuate concave surfaces 85 and 86 are formed symmetrically with respect to the center line 65, and preferably the two arcuate convex surfaces 87 and 88 respectively have similar shapes with greater radii of curvature than the respective radii of curvature of the corresponding two arcuate concave surfaces 85 and 86. In this case, as shown in Fig. 12, the arcuate concave surface 18 of the rack guide base body 22 is sufficient if it is formed by two arcuate concave surfaces 93 and 94 having complementary shapes to the shapes of the corresponding arcuate convex surfaces 87 and 88 of the curved sliding plate piece 26 so as to be brought into close contact with the arcuate convex surfaces 87 and 88.

According to the embodiment shown in Fig. 12, coupled with the above-described advantage that the curved sliding plate piece 26 can be similarly held securely on the rack guide base body 22 over extended periods of time, and the line contact or narrow belt-like contact of the rack bar 10 with the curved sliding plate piece 26 at the regions 90 and 92 can be maintained over extended periods of time as in the state of the initial setting, the sliding frictional resistance between the rack bar 10 and the curved sliding plate piece 26 can be substantially reduced as the result of the line contact of the rack bar 10 with the curved sliding plate piece 26 at the regions 90 and 92 or the narrow belt-like contact in the vicinities of the regions 90 and 92 including the regions 90 and 92.

### DESCRIPTION OF REFERENCE NUMERALS

- 9:: arcuate outer peripheral surface
- 10:: rack bar
- 11:: rack guide
- 17:: end face
- 18:: arcuate concave surface
- 19:: end face
- 20:: hollow recessed portion
- 21:: circular through hole
- 22:: rack guide base body
- 23:: arcuate concave surface
- 24:: arcuate convex surface
- 25:: projecting portion
- 26:: curved sliding plate piece

## Claims

1. A rack guide (11) comprising:
a synthetic resin-made rack guide base body (22) which has an arcuate concave surface (18) provided at one end face (17) thereof, a hollow recessed portion (20) provided at another end face (19) thereof, and a circular through hole (21) which at one end thereof is open in a central portion of the arcuate concave surface (18) and which at another end thereof is open in the hollow recessed portion (20); and a curved sliding plate piece (26, 81) which has an arcuate concave surface (23) for supporting an arcuate outer peripheral surface (9) of a rack bar (10) slidably, an arcuate convex surface (24) which is brought into close contact with the arcuate concave surface (18) of said rack guide base body (22), and a tubular projecting portion (25) which is provided integrally on the arcuate convex surface (24), and which is open in the arcuate concave surface (23) and has an interior closed with respect to the hollow recessed portion (20), **characterized in that**,
said projecting portion (25) has a tubular portion (41) provided integrally on the arcuate convex surface (24) at one end thereof, a closed bottom portion (42) provided at the other end of the tubular portion (41), and a bulged portion (43) which is on one side thereof provided integrally on the tubular portion (41) and is on another side thereof provided integrally on the closed bottom portion (42) and is expanded radially outwardly,
said curved sliding plate piece (26, 81) is secured to said rack guide base body (22) as the tubular portion (41) is press-fitted into the circular through hole (21) and the bulged portion (43) is brought into pressure contact with said rack guide base body (22) around the other end of the circular through hole (21),
said hollow recessed portion (20) is defined by a cylindrical inner peripheral surface (28) of the rack guide base body (22) and an annular ceiling surface (29) of the rack guide base body (22),
a plurality of reinforcing vertical ribs (30) are integrally formed on the cylindrical inner peripheral surface (28) in such a manner as to be spaced apart at equal intervals in a circumferential direction,
a plurality of reinforcing horizontal ribs (31) are integrally formed on the ceiling surface (29) in such a manner as to be connected to the respective vertical ribs (30) and to be spaced apart at equal intervals in the circumferential direction, and
said circular through hole (21) is open at the ceiling surface (29) to the hollow recessed portion (20).

2. The rack guide (11) according to claim 1, wherein the bulged portion (43) is formed by caulking a circular outer rim of the closed bottom portion (42) in the securing of said curved sliding plate piece (26, 81) to said rack guide base body (22).

3. The rack guide (11) according to claim 1 or 2, wherein said curved sliding plate piece (26, 81) includes a back plate, a porous sintered metal layer (52) integrally coated and formed on a surface of the back plate, and a synthetic resin layer (53) coated on a surface of the porous sintered metal layer (52) in such a manner as to fill pores of the porous sintered metal layer (52), and the arcuate concave surface (23) is constituted by an exposed surface of the synthetic resin layer (53).

4. The rack guide (11) according to any one of claims 1 to 3, wherein the arcuate concave surface (18) has a substantially elliptical shape in a plan view.

5. The rack guide (11) according to claim 4, wherein said curved sliding plate piece (26) has a substantially elliptical shape in a plan view and is disposed on the arcuate concave surface (18) having the substantially elliptical shape in a plan view.

6. The rack guide (11) according to any one of claims 1 to 3, wherein said rack guide base body (22) has on the one end face (17) thereof a pair of plan-view substantially semielliptical concave surfaces (82) and a plan-view rectangular concave portion (83) which is sandwiched by the pair of plan-view substantially semielliptical concave surfaces (82) and on which the arcuate concave surface (18) is formed.

7. The rack guide (11) according to claim 6, wherein said curved sliding plate piece (81) has a rectangular shape in a plan view and is fitted and secured to the plan-view rectangular concave portion (83).

8. The rack guide (11) according to any one of claims 1 to 7, wherein the arcuate concave surface (23) of said curved sliding plate piece (26) is constituted by two arcuate concave surfaces (61, 62) which are symmetrical with respect to a center line (65) passing through a center of curvature of the arcuate outer peripheral surface (9) of the rack bar (10), such that, in an angular range (66) from an angle 0° to an angle not exceeding 50° on either side in an angular direction of the center line (65) passing through the center of curvature of the arcuate outer peripheral surface (9) of the rack bar (10), each of the arcuate concave surfaces (61) has as its center of curvature the center of curvature of the arcuate outer peripheral surface (9) of the rack bar (10) and has a radius of curvature substantially identical to a radius of curvature of the arcuate outer peripheral surface (9) of the rack bar (10), so as to come into contact with the arcuate outer peripheral surface (9) of the rack bar (10), whereas, in an angular range (67) exceeding an angle 50°, each of the arcuate concave surfaces (62) has a center of curvature off-centered from the center of curvature of the arcuate outer peripheral surface (9) of the rack bar (10) and has a radius of curvature greater than the radius of curvature of the arcuate outer peripheral surface (9) of the rack bar (10), so as to have a clearance with the arcuate outer peripheral surface (9) of the rack bar (10).

9. The rack guide (11) according to any one of claims 1 to 7, wherein the arcuate concave surface (23) of said curved sliding plate piece (26) is constituted by two arcuate concave surfaces (85, 86) which are symmetrical with respect to a center line (65) passing through a center of curvature of the arcuate outer peripheral surface (9) of the rack bar (10), such that each of the arcuate concave surfaces (85, 86) has a center of curvature off-centered from a center of curvature of the arcuate outer peripheral surface (9) of the rack bar (10) and has a radius of curvature greater than a radius of curvature of the arcuate outer peripheral surface (9) of the rack bar (10), so as to respectively come into contact with the arcuate outer peripheral surface (9) of the rack bar (10) at each of two regions in an angular range from 0° to 90° on each side of the center line (65) passing through the center of curvature of the arcuate outer peripheral surface (9) of the rack bar (10).

10. The rack guide (11) according to claim 9, wherein the angular range (66, 67) is from 30° to 60° or from 30° to 45°.

11. The rack guide (11) according to any one of claims 1 to 10, wherein said rack guide base body (22) is formed of a thermoplastic synthetic resin containing as a reinforcing filler 30 to 50% by mass of at least one inorganic substance selected from glass fiber, carbon fiber, and glass powder.

12. The rack guide (11) according to claim 11, wherein the thermoplastic synthetic resin is selected from polyacetal resin, polyamide resin, polyester resin, and polyphenylene sulfide resin.

13. Arack-and-pinion type steering apparatus (1) comprising:
a gear case (3) having a hollow portion (2);
a pinion (7) which is disposed rotatably in the hollow portion (2) of said gear case (3) and is rotated by steering;
a rack bar (10) having rack teeth (8) meshing with said pinion (7);
a rack guide (11) according to any one of claims 1 to 12 which is disposed movably in the hollow portion (2) of said gear case (3) and guides and supports said rack bar (10) movably; and
resilient means which is disposed in the hollow portion (2) of said gear case (3) and resiliently presses the rack teeth (8) of said rack bar (10) against said pinion (7) by means of said rack guide (11).

## Patentansprüche

1. Zahnstangenführung (11), umfassend:
einen Zahnstangenführungsbasiskörper (22) aus synthetischem Harz, welcher eine an einer Endfläche (17) hiervon angeordnete bogenförmige konkave Oberfläche (18), einen an einer anderen Endfläche (19) hiervon angeordneten hohlen ausgesparten Abschnitt (20) und ein kreisförmiges Durchgangsloch (21) aufweist, welches an einem Ende hiervon in einem mittleren Abschnitt der bogenförmigen konkaven Oberfläche (18) offen ist und welches an einem anderen Ende hiervon in dem hohlen ausgesparten Abschnitt (20) offen ist, und einen gewölbten Gleitplattenteil (26, 81), welcher eine bogenförmige konkave Oberfläche (23) zum gleitenden Abstützen einer bogenförmigen Außenumfangsoberfläche (9) einer Zahnstange (10), eine bogenförmige konvexe Oberfläche (24), welche in engen Kontakt mit der bogenförmigen konkaven Oberfläche (18) des Zahnstangenführungsbasiskörpers (22) gebracht ist und einen rohrförmigen vorstehenden Abschnitt (25) aufweist, welcher integral an der bogenförmigen konvexen Oberfläche (24) angeordnet ist und welcher in dem bogenförmigen konkaven Abschnitt (23) offen ist und welcher ein gegenüber dem hohlen ausgesparten Abschnitt (20) geschlossenes Inneres aufweist,
**gekennzeichnet dadurch,**
**dass** der vorstehende Abschnitt (25) einen an einem Ende der bogenförmigen konvexen Oberfläche (24) angeordneten rohrförmigen Abschnitt (41), einen an dem anderen Ende des rohrförmigen Abschnitts (41) angeordneten geschlossenen Bodenabschnitt (42) und einen gewölbten Abschnitt (43) aufweist, welcher integral an dem rohrförmigen Abschnitt (41) auf einer Seite des gewölbten Abschnitts (43) angeordnet ist und integral an dem geschlossenen Bodenabschnitt (42) auf einer anderen Seite des gewölbten Abschnitts (43) angeordnet ist und radial nach außen ausgeweitet ist,
**dass** das gewölbte Gleitplattenteil (26, 81) an dem Zahnstangenführungsbasiskörper (22) befestigbar ist, während der rohrförmige Abschnitt (41) in das kreisförmige Durchgangsloch (21) eingepresst wird und der gewölbte Abschnitt (43) um das andere Ende des kreisförmigen Durchgangslochs (21) in einen Druckkontakt mit dem Zahnstangenführungsbasiskörper (22) gebracht ist,
**dass** der hohle ausgesparte Abschnitt (20) von einer zylindrischen Innenumfangsoberfläche (28) des Zahnstangenführungsbasiskörpers (22) und einem ringförmigen Deckenabschnitt (29) des Zahnstangenführungsbasiskörpers (22) definiert ist,
**dass** eine Vielzahl von verstärkenden senkrechten Rippen (30) integral an der zylindrischen Innenumfangsoberfläche (28) derart angeordnet sind, dass sie in einer Umfangsrichtung in gleichmäßigen Abständen voneinander beabstandet sind,
**dass** eine Vielzahl von verstärkenden waagerechten Rippen (31) integral an der Deckenoberfläche (29) derart angeordnet sind, dass sie mit den jeweiligen senkrechten Rippen (30) verbunden sind und in einer Umfangsrichtung in gleichmäßigen Abständen voneinander beabstandet sind, und
**dass** das kreisförmige Durchgangsloch (21) an der Deckenoberfläche (29) in Richtung des hohlen ausgesparten Abschnitts (20) offen ist.

2. Zahnstangenführung (11) nach Anspruch 1, wobei der gewölbte Abschnitt (43) durch Abdichten eines kreisförmigen Außenrands des geschlossenen Bodenabschnitts (42) in der Befestigung des gewölbten Gleitplattenteils (26, 81) des Zahnstangenführungsbasiskörpers (22) ausgebildet ist.

3. Zahnstangenführung (11) nach Anspruch 1 oder 2, wobei das gewölbte Gleitplattenteil (26, 81) eine Rückwand, eine integral auf einer Oberfläche der Rückwand aufgebrachte und geformte poröse gesinterte Metallschicht (52) und eine auf einer Oberfläche der porösen gesinterten Metallschicht (52) aufgebrachte synthetische Harzschicht (53) umfasst, derart, dass Poren der porösen gesinterten Metallschicht (52) ausgefüllt sind, und wobei die bogenförmige konkave Oberfläche (23) von einer freiliegenden Oberfläche der synthetischen Harzschicht (53) ausgebildet ist.

4. Zahnstangenführung (11) nach einem der Ansprüche 1 bis 3, wobei die bogenförmige konkave Oberfläche (18) in einer Draufsicht eine im Wesentlichen elliptische Gestalt aufweist.

5. Zahnstangenführung (11) nach Anspruch 4, wobei der gewölbte Gleitplattenteil (26) in einer Draufsicht eine im Wesentlichen elliptische Gestalt aufweist und an der bogenförmigen konkaven Oberfläche (18) mit der in einer Draufsicht im Wesentlichen elliptischen Gestalt angeordnet ist.

6. Zahnstangenführung (11) nach einem der Ansprüche 1 bis 3, wobei der Zahnstangenführungsbasiskörper (22) an einer Endfläche (17) hiervon ein Paar in einer Draufsicht im Wesentlichen semielliptische konkave Oberflächen (82) und einen in einer Draufsicht rechteckigen konkaven Abschnitt (83) aufweist, welcher von dem Paar in einer Draufsicht im Wesentlichen semielliptischen konkaven Oberflächen (82) auf zwei Seiten umgeben ist und an welchem die bogenförmige konkave Oberfläche (18) ausgebildet ist.

7. Zahnstangenführung (11) nach Anspruch 6, wobei das gewölbte Gleitplattenteil (81) in einer Draufsicht eine rechteckige Gestalt aufweist und an dem in einer Draufsicht rechteckigen konkaven Abschnitt (83) angebracht und befestigt ist.

8. Zahnstangenführung (11) nach einem der Ansprüche 1 bis 7, wobei die bogenförmige konkave Oberfläche (23) des gewölbten Gleitplattenteils (26) durch zwei bogenförmige konkave Oberflächen (61, 62) ausgebildet ist, welche gegenüber einer durch eine Krümmungsmitte der bogenförmigen Außenumfangsoberfläche (9) der Zahnstange (10) verlaufende Mittellinie (65) symmetrisch ausgebildet sind, derart, dass die jeweilige bogenförmige konkave Oberfläche (61) in einem Winkelbereich (66) von 0° bis höchstens 50° auf jeder Seite in einer Winkelrichtung der durch die Krümmungsmitte der bogenförmigen Außenumfangsfläche (9) der Zahnstange (10) verlaufende Mittellinie (65) als ihre Krümmungsmitte die Krümmungsmitte der bogenförmigen Außenumfangsfläche (9) der Zahnstange (10) aufweist und einen im Wesentlichen mit einem Krümmungsradius der bogenförmigen Außenumfangsfläche (9) der Zahnstange (10) identischen Krümmungsradius aufweist, sodass die bogenförmigen konkaven Oberflächen (61) mit der bogenförmigen Außenumfangsfläche (9) der Zahnstange (10) kontaktierbar sind, wohingegen die jeweilige bogenförmige konkave Oberfläche (62) in einem Winkelbereich (67) größer als ein Winkel von 50° eine zu der Krümmungsmitte der bogenförmigen Außenumfangsfläche (9) der Zahnstange versetzte Krümmungsmitte aufweist und einen Krümmungsradius aufweist, der größer als der Krümmungsradius der bogenförmigen Außenumfangsfläche (9) der Zahnstange (10) ist, sodass die konkave Oberflächen (62) eine Zwischenraum zu der bogenförmigen Außenumfangsfläche (9) der Zahnstange (10) ausbilden.

9. Zahnstangenführung (11) nach einem der Ansprüche 1 bis 7, wobei die bogenförmige konkave Oberfläche (23) des gewölbten Gleitplattenteils (26) von zwei bogenförmigen konkaven Oberflächen (85, 86) ausgebildet ist, welche gegenüber einer durch eine Krümmungsmitte der bogenförmigen Außenumfangsoberfläche (9) der Zahnstange (10) verlaufende Mittellinie (65) symmetrisch ausgebildet sind, derart, dass die jeweilige bogenförmige konkave Oberfläche (85, 86) eine zu einer Krümmungsmitte der bogenförmigen Außenumfangsoberfläche (9) der Zahnstange (10) versetzte Krümmungsmitte aufweist und einen Krümmungsradius aufweist, der größer als ein Krümmungsradius der bogenförmigen Außenumfangsoberfläche (9) der Zahnstange (10) ist, so dass die bogenförmigen konkaven Außenumfangsoberflächen (85, 86) jeweils mit der bogenförmigen Außenumfangsoberfläche (9) der Zahnstange (10) an jeweils einer von zwei Bereichen in einem Winkelbereich von 0° bis 90° auf jeder Seite der durch die Krümmungsmitte der bogenförmigen Außenumfangsoberfläche (9) der Zahnstange (10) verlaufende Mittellinie (65) kontaktierbar ist.

10. Zahnstangenführung (11) nach Anspruch 9, wobei der Winkelbereich (66, 67) sich von 30° bis 60° oder von 30° bis 45° erstreckt.

11. Zahnstangenführung (11) nach einem der Ansprüche 1 bis 10, wobei der Zahnstangenführungsbasiskörper (22) aus einem thermoplastischen synthetischen Harz ausgebildet ist, welcher als verstärkenden Füllstoff 30 bis 50 Gew.-% von mindestens einem aus folgenden anorganischen Stoffen auswählbaren anorganischen Stoff aufweist: Glasfaser, Kohlenstofffaser und Glaspulver.

12. Zahnstangenführung (11) nach Anspruch 11, wobei das thermoplastische synthetische Harz aus folgenden Harzen wählbar ist: Polyacetalharz, Polyamidharz, Polyesterharz und Polyphenylensulfidharz.

13. Zahnstangensteuervorrichtung (1), umfassend:
ein Getriebegehäuse (3) mit einem hohlen Abschnitt (2);
einen Ritzel (7), welcher drehbar in dem hohlen Abschnitt (2) des Getriebegehäuses (3) angeordnet ist und durch Steuern drehbar ist;
eine Zahnstange (10) mit einer Zahnstangenzahnung (8), welche mit dem Ritzel (7) in Eingriff steht;
eine Zahnstangenführung (11) nach einem der Ansprüche 1 bis 12, welche bewegbar in dem hohlen Abschnitt (2) des Getriebegehäuses (3) angeordnet ist und die Zahnstange (10) bewegbar führt und stützt; und
elastische Mittel, welche in dem hohlen Abschnitt (2) des Getriebegehäuses (3) angeordnet sind und die Zahnstangenzahnung (8) der Zahnstange (10) mittels der Zahnstangenführung (11) elastisch gegen das Ritzel (7) vorspannen.

## Revendications

1. Guide de crémaillère (11) comprenant :
un corps de base de guide de crémaillère en résine synthétique (22) qui a une surface arquée concave (18) prévue au niveau d'une face d'extrémité (17) de celui-ci, une partie évidée creuse (20) prévue au niveau d'une autre face d'extrémité (19) de celui-ci, et un trou traversant circulaire (21) qui, à une extrémité de celui-ci, est ouvert dans une partie centrale de la surface arquée concave (18) et qui, à une autre extrémité de celui-ci, est ouvert dans la partie évidée creuse (20) ; et une pièce en forme de plaque coulissante courbée (26, 81) qui a une surface arquée concave (23) destinée à supporter de façon coulissante une surface périphérique extérieure arquée (9) d'une barre de crémaillère (10), une surface arquée convexe (24) qui est mise en contact étroit avec la surface arquée concave (18) dudit corps de base de guide de crémaillère (22), et une partie saillante tubulaire (25) qui est formée d'un seul tenant avec la surface arquée convexe (24), et qui est ouverte dans la surface arquée concave (23) et a une partie intérieure fermée par rapport à la partie évidée creuse (20), **caractérisé en ce que** :
ladite partie saillante (25) comporte une partie tubulaire (41) formée d'un seul tenant avec la surface arquée convexe (24) à une extrémité de celle-ci, une partie de fond fermée (42) prévue à l'autre extrémité de la partie tubulaire (41), et une partie bombée (43) qui est, sur un de ses côtés, formée d'un seul tenant avec la partie tubulaire (41) et qui est, sur un autre de ses côtés, formée d'un seul tenant avec la partie de fond fermée (42) et est expansée radialement vers l'extérieur,
ladite pièce en forme de plaque coulissante courbée (26, 81) est fixée audit corps de base de guide de crémaillère (22) pendant que la partie tubulaire (41) est emmanchée à force dans le trou traversant circulaire (21) et la partie bombée (43) est mise en contact sous pression avec ledit corps de base de guide de crémaillère (22) autour de l'autre extrémité du trou traversant circulaire (21),
ladite partie évidée creuse (20) est définie par une surface périphérique intérieure cylindrique (28) du corps de base de guide de crémaillère (22) et une surface de plafond annulaire (29) du corps de base de guide de crémaillère (22),
une pluralité de nervures de renforcement verticales (30) sont formées d'un seul tenant avec la surface périphérique intérieure cylindrique (28) de manière à être espacées les unes des autres à intervalles réguliers dans une direction circonférentielle,
une pluralité de nervures de renforcement horizontales (30) sont formées d'un seul tenant avec la surface de plafond (29) de manière à être connectées aux nervures verticales respectives (30) et à être espacées les unes des autres à intervalles réguliers dans la direction circonférentielle, et
ledit trou traversant circulaire (21) est ouvert au niveau de la surface de plafond (29) en débouchant dans la partie évidée creuse (20).

2. Guide de crémaillère (11) selon la revendication 1, dans lequel la partie bombée (43) est formée en matant un rebord extérieur circulaire de la partie de fond fermée (42) lors de la fixation de ladite pièce en forme de plaque coulissante courbée (26, 81) sur ledit corps de base de guide de crémaillère (22).

3. Guide de crémaillère (11) selon la revendication 1 ou 2, dans lequel ladite pièce en forme de plaque coulissante courbée (26, 81) comporte une plaque arrière, une couche de métal fritté poreux (52) appliquée intégralement et formée sur une surface de la plaque arrière, et une couche de résine synthétique (53) appliquée sur une surface de la couche de métal fritté poreux (52) de manière à remplir les pores de la couche de métal fritté poreux (52), et la surface arquée concave (23) est constituée par une surface exposée de la couche de résine synthétique (53).

4. Guide de crémaillère (11) selon l'une quelconque des revendications 1 à 3, dans lequel la surface arquée concave (18), vue de dessus, a une forme substantiellement elliptique.

5. Guide de crémaillère (11) selon la revendication 4, dans lequel ladite pièce en forme de plaque coulissante courbée (26), vue de dessus, a une forme substantiellement elliptique, et est placée sur la surface arquée concave (18) ayant la forme substantiellement elliptique en vue de dessus.

6. Guide de crémaillère (11) selon l'une quelconque des revendications 1 à 3, dans lequel ledit corps de base de guide de crémaillère (22) a sur sa première face d'extrémité (17) une paire de surfaces concaves substantiellement semi-elliptiques en vue de dessus (82) et une partie concave rectangulaire en vue de dessus (83) qui est prise entre les deux surfaces concaves substantiellement semi-elliptiques en vue de dessus (82) et sur laquelle est formée la surface arquée concave (18).

7. Guide de crémaillère (11) selon la revendication 6, dans lequel ladite pièce en forme de plaque coulissante courbée (81) a une forme rectangulaire en vue de dessus et est montée et fixée sur la partie concave rectangulaire en vue de dessus (83).

8. Guide de crémaillère (11) selon l'une quelconque des revendications 1 à 7, dans lequel la surface arquée concave (23) de ladite pièce en forme de plaque coulissante courbée (26) est constituée de deux surfaces arquées concaves (61, 62) qui sont symétriques par rapport à une droite centrale (65) qui passe par un centre de courbure de la surface périphérique extérieure arquée (9) de la barre de crémaillère (10), de sorte que, dans une plage angulaire (66) d'un angle de 0° à un angle ne dépassant pas 50° de chaque côté dans une direction angulaire de la droite centrale (65) passant par le centre de courbure de la surface périphérique extérieure arquée (9) de la barre de crémaillère (10), chacune des surfaces arquées concaves (61) a comme centre de courbure le centre de courbure de la surface périphérique extérieure arquée (9) de la barre de crémaillère (10) et a un rayon de courbure sensiblement identique à un rayon de courbure de la surface périphérique extérieure arquée (9) de la barre de crémaillère (10), afin de venir en contact avec la surface périphérique extérieure arquée (9) de la barre de crémaillère (10), tandis que, dans une plage angulaire (67) dépassant un angle de 50°, chacune des surfaces arquées concaves (62) a un centre de courbure décentré par rapport au centre de courbure de la surface périphérique extérieure arquée (9) de la barre de crémaillère (10) et a un rayon de courbure supérieur au rayon de courbure de la surface périphérique extérieure arquée (9) de la barre de crémaillère (10), afin d'avoir du jeu par rapport à la surface périphérique extérieure arquée (9) de la barre de crémaillère (10).

9. Guide de crémaillère (11) selon l'une quelconque des revendications 1 à 7, dans lequel la surface arquée concave (23) de ladite pièce en forme de plaque coulissante courbée (26) est constituée de deux surfaces arquées concaves (85, 86) qui sont symétriques par rapport à une droite centrale (65) qui passe par un centre de courbure de la surface périphérique extérieure arquée (9) de la barre de crémaillère (10), de sorte que chacune des surfaces arquées concaves (85, 86) a un centre de courbure décentré par rapport à un centre de courbure de la surface périphérique extérieure arquée (9) de la barre de crémaillère (10) et a un rayon de courbure plus grand qu'un rayon de courbure de la surface périphérique extérieure arquée (9) de la barre de crémaillère (10), afin de venir en contact respectivement avec la surface périphérique extérieure arquée (9) de la barre de crémaillère (10) en chacune de deux régions dans une plage angulaire de 0° à 90° de chaque côté de la droite centrale (65) qui passe par le centre de courbure de la surface périphérique extérieure arquée (9) de la barre de crémaillère (10).

10. Guide de crémaillère (11) selon la revendication 9, dans lequel la plage angulaire (66, 67) va de 30° à 60° ou de 30° à 45°.

11. Guide de crémaillère (11) selon l'une quelconque des revendications 1 à 10, dans lequel ledit corps de base de guide de crémaillère (22) est fait d'une résine synthétique thermoplastique contenant comme charge renforçante de 30 à 50 % en poids d'au moins une substance inorganique choisie parmi la fibre de verre, la fibre de carbone et la poudre de verre.

12. Guide de crémaillère (11) selon la revendication 11, dans lequel la résine synthétique thermoplastique est choisie parmi une résine polyacétal, une résine polyamide, une résine polyester et une résine polysulfure de phénylène.

13. Dispositif de direction du type à crémaillère (1) comprenant :
un carter d'engrenage (3) ayant une partie creuse (2) ;
un pignon (7) qui est disposé à rotation dans la partie creuse (2) dudit carter d'engrenage (3) et qui est mis en rotation par le braquage ;
une barre de crémaillère (10) comportant des dents de crémaillère (8) qui engrènent avec ledit pignon (7) ;
un guide de crémaillère (11) selon l'une quelconque des revendications 1 à 12, qui est placé de manière mobile dans la partie creuse (2) dudit carter d'engrenage (3) et qui guide et supporte ladite barre de crémaillère (10) de façon mobile ; et
un moyen résilient qui est placé dans la partie creuse (2) dudit carter d'engrenage (3) et qui pousse de façon résiliente les dents de crémaillère (8) de ladite barre de crémaillère (10) contre ledit pignon (7) au moyen dudit guide de crémaillère (11).
